(19) Europäisches Patentamt / European Patent Office / Office européen des brevets

(11) EP 4 534 592 A1

(12) **EUROPEAN PATENT APPLICATION**
published in accordance with Art. 153(4) EPC

(43) Date of publication:
**09.04.2025 Bulletin 2025/15**

(21) Application number: **23815814.1**

(22) Date of filing: **18.05.2023**

(51) International Patent Classification (IPC):
***C08L 9/00*** *(2006.01)* ***B60C 1/00*** *(2006.01)*
***C08K 3/36*** *(2006.01)* ***C08K 5/548*** *(2006.01)*

(52) Cooperative Patent Classification (CPC):
**B60C 1/00; C08K 3/36; C08K 5/548; C08L 9/00; C08L 9/06;** Y02T 10/86

(86) International application number:
**PCT/JP2023/018607**

(87) International publication number:
**WO 2023/234055 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.05.2022 JP 2022089134**

(71) Applicant: **Zeon Corporation**
**Tokyo 100-8246 (JP)**

(72) Inventors:
- **KARATO, Takeshi**
  **Tokyo 100-8246 (JP)**
- **IIZUKA, Takashi**
  **Tokyo 100-8246 (JP)**

(74) Representative: **Maiwald GmbH**
**Elisenhof**
**Elisenstraße 3**
**80335 München (DE)**

(54) **RUBBER COMPOSITION, RUBBER CROSSLINKED PRODUCT, TIRE, AND RUBBER CROSSLINKED PRODUCT MANUFACTURING METHOD**

(57) Provided is a rubber composition that has excellent silica dispersibility and thus provides superior product stability, and can provide a cross-linked rubber having excellent fuel efficiency and durability.

Provided is a rubber composition comprising a conjugated diene polymer, silica, a sulfide-based silane coupling agent, and a cross-linking agent, and having a value of tc10, which is an indicator of vulcanization characteristics measured using an oscillating curemeter according to JIS K6300-2, which satisfies Formula (1).

$$0.8 \text{ minutes} < tc10 < 5.0 \text{ minutes} \quad (1)$$

EP 4 534 592 A1

## Description

TECHNICAL FIELD

The present invention relates to a rubber composition, a cross-linked rubber, a tire, and a method for producing a cross-linked rubber.

BACKGROUND ART

Due to recent increasing environmental concerns, a polymer for use in tires for automobiles which can provide excellent fuel efficiency is required. Tires prepared from a rubber composition containing a conjugated diene polymer and silica as a filler have lower heat buildup than that of tires prepared from traditional rubber compositions containing carbon black, and thus have further enhanced fuel efficiency.

With respect to a conjugated diene polymer for producing such tires, Patent Document 1 discloses a conjugated diene rubber comprising: such a structure that not less than 3 conjugated diene polymer chains are bound to each other via a denaturing agent, an amount of the structure in the conjugated diene rubber being not less than 5% by weight, the structure being obtained by causing the not less than 3 conjugated diene polymer chains and the denaturing agent to be reacted with each other, each of the not less than 3 conjugated diene polymer chains being such that at least one of terminals is an isoprene block having not less than 70% by weight of an isoprene monomer unit, and the other one of terminals is an active terminal, the denaturing agent (I) having, per molecule, at least one of (1) one or more epoxy groups and (2) one or more hydrocarbyloxysilyl groups, and (II) being such that a total number of the number of the one or more epoxy groups per molecule and the number of hydrocarbyloxy groups in the one or more hydrocarbyloxysilyl groups per molecule is not less than 3.

RELATED ART DOCUMENTS

PATENT DOCUMENTS

Patent Document 1: WO 2011/105362

SUMMARY OF THE INVENTION

PROBLEM TO BE SOLVED BY THE INVENTION

However, in recent years, there is an increasing demand for an automobile tire having higher performance, and thus it is desired to develop a new rubber composition that can be used for producing a tire having further lower heat buildup and excellent durability. It is also desired that the rubber composition has excellent silica dispersibility and thus provides superior product stability.

The present invention has been made in consideration of the above problems, and an object of the present invention is to provide a rubber composition that has excellent silica dispersibility and thus provides superior product stability, and can provide a cross-linked rubber having excellent fuel efficiency and durability.

MEANS FOR SOLVING PROBLEMS

The present inventor, who has conducted extensive research to achieve the above object, has found that the above object can be achieved when a sulfide-based silane coupling agent is contained in addition to a conjugated diene polymer, silica, and a cross-linking agent, and the value of tc10, which is an indicator of vulcanization characteristics, is controlled to fall within a specific range, and has completed the present invention.

Specifically, the present invention provides the following rubber composition.

[1] A rubber composition comprising a conjugated diene polymer, silica, a sulfide-based silane coupling agent, and a cross-linking agent, and having a value of tc10, which is an indicator of vulcanization characteristics measured using an oscillating curemeter according to JIS K6300-2, which satisfies Formula (1):

$$0.8 \text{ minutes} < tc10 < 5.0 \text{ minutes} \quad (1).$$

[2] The rubber composition according to [1], wherein the conjugated diene polymer contains 25 to 99.9% by weight of 1,3-butadiene units, 0.1 to 15% by weight of isoprene monomer units, and 0 to 60% by weight of aromatic vinyl

monomer units.

[3] The rubber composition according to [1] or [2], wherein the conjugated diene polymer contains 40 to 96.9% by weight of 1,3-butadiene units, 0.1 to 10% by weight of isoprene monomer units, and 3 to 50% by weight of aromatic vinyl monomer units.

[4] The rubber composition according to any one of [1] to [3], wherein the conjugated diene polymer contains an isoprene-containing block containing 80 to 100% by weight of isoprene monomer units.

[5] The rubber composition according to any one of [1] to [4], wherein the conjugated diene polymer contains a silicon atom-containing functional group formed with a siloxane compound.

Furthermore, the present invention also provides the following cross-linked rubber and tire.

[6] A cross-linked rubber which is a cross-linked product of the rubber composition according to any one of [1] to [5].

[7] A tire comprising the cross-linked rubber according to [6].

In addition, the present invention provides the following method for producing a cross-linked rubber.

[8] A method for producing a cross-linked rubber, comprising a step of obtaining a rubber composition by mixing a conjugated diene polymer, silica, a sulfide-based silane coupling agent, and a cross-linking agent, and then allowing the mixture to stand at room temperature for 1 to 21 days, and a step of cross-linking the rubber composition.

[9] The method for producing a cross-linked rubber according to [8], wherein the conjugated diene polymer contains 25 to 99.9% by weight of 1,3-butadiene units, 0.1 to 15% by weight of isoprene monomer units, and 0 to 60% by weight of aromatic vinyl monomer units.

[10] The method for producing a cross-linked rubber according to [8] or [9], wherein the conjugated diene polymer contains 40 to 96.9% by weight of 1,3-butadiene units, 0.1 to 10% by weight of isoprene monomer units, and 3 to 50% by weight of aromatic vinyl monomer units.

[11] The method for producing a cross-linked rubber according to any one of [8] to [10], wherein the conjugated diene polymer contains an isoprene-containing block containing 80 to 100% by weight of isoprene monomer units.

[12] The method for producing a cross-linked rubber according to any one of [8] to [11], wherein the conjugated diene polymer contains a silicon atom-containing functional group formed with a siloxane compound.

EFFECTS OF THE INVENTION

The present invention provides a rubber composition that has excellent silica dispersibility and thus provides superior product stability, and can provide a cross-linked rubber having excellent fuel efficiency and durability.

DESCRIPTION OF EMBODIMENTS

The rubber composition according to the present invention comprises a conjugated diene polymer, silica, a sulfide-based silane coupling agent, and a cross-linking agent, and has a value of tc10, which is an indicator of vulcanization characteristics measured using an oscillating curemeter according to JIS K6300-2, which satisfies Formula (1).

$$0.8 \text{ minutes} < tc10 < 5.0 \text{ minutes} \quad (1)$$

Since the rubber composition according to the present invention contains a sulfide-based silane coupling agent in addition to the conjugated diene polymer, silica, and the cross-linking agent, and has a value of tc10, which is an indicator of vulcanization characteristics, which is controlled to fall within the above specified range, excellent effects can be achieved. That is, excellent product stability accompanying excellent silica dispersibility can be achieved, and excellent fuel efficiency and durability of a cross-linked rubber to be obtained can be achieved at the same time.

[Conjugated diene polymer]

The rubber composition according to the present invention contains a conjugated diene polymer as a rubber component.

The conjugated diene polymer used in the present invention contains at least conjugated diene monomer units. Examples of conjugated diene compounds to form the conjugated diene monomer units include 1,3-butadiene, isoprene, 2,3-dimethyl-1,3-butadiene, 2-chloro-1,3-butadiene, 1,3-pentadiene, 1,3-hexadiene, and the like. Among these, 1,3-butadiene and isoprene are preferred, and 1,3-butadiene is more preferred. These conjugated diene compounds may be used alone or in combination.

When the conjugated diene polymer used in the present invention contains 1,3-butadiene units, the content of 1,3-butadiene units is not particularly limited, and is preferably 25 to 99.9% by weight, more preferably 40 to 96.9% by weight, still more preferably 47 to 89.8% by weight, particularly preferably 53 to 79.8% by weight. When the content of the

1,3-butadiene units is within the above ranges, the silica dispersibility and the balance between fuel efficiency and durability of a cross-linked rubber to be obtained can be further improved.

When the conjugated diene polymer used in the present invention contains isoprene monomer units, the content of the isoprene monomer units is not particularly limited, and is preferably 0.1 to 15% by weight, more preferably 0.1 to 10% by weight, still more preferably **0.2** to 5% by weight, particularly preferably **0.2** to 2% by weight. When the content of the isoprene monomer units is within the above ranges, the silica dispersibility and the balance between fuel efficiency and durability of a cross-linked rubber to be obtained can be further improved.

The content of the conjugated diene monomer units in the conjugated diene polymer (when a plurality of conjugated diene monomer units is contained, the total content of the conjugated diene monomer units) is not particularly limited, and is preferably 40 to 100% by weight, more preferably 50 to 97% by weight, still more preferably 52 to 90% by weight, particularly preferably 55 to 80% by weight. When the content of the conjugated diene monomer units is within the above ranges, the silica dispersibility and the balance between fuel efficiency and durability of a cross-linked rubber to be obtained can be further improved.

In the conjugated diene polymer, the amount of vinyl bond in the conjugated diene monomer units is preferably 1 to 90 mol%, more preferably 10 to 80 mol%, still more preferably 20 to 70 mol%, further still more preferably 24 to 60 mol%, particularly preferably 26 to 50 mol%, most preferably 28 to 44 mol%. When the vinyl bond content in the conjugated diene monomer units is within the above ranges, the silica dispersibility and the balance between fuel efficiency and durability of a cross-linked rubber to be obtained can be further improved.

The conjugated diene polymer (A) used in the present invention is preferably a copolymer containing aromatic vinyl monomer units in addition to conjugated diene monomer units. Examples of aromatic vinyl monomers to form the aromatic vinyl monomer units include styrene, methylstyrene, ethylstyrene, t-butylstyrene, $\alpha$-methylstyrene, $\alpha$-methyl-p-methylstyrene, chlorostyrene, bromostyrene, methoxystyrene, dimethylaminomethylstyrene, dimethylaminoethylstyrene, diethylaminomethylstyrene, diethylaminoethylstyrene, cyanoethylstyrene, vinylnaphthalene, and the like. Among these, styrene is preferred. These aromatic vinyl monomers may be used alone or in combination.

The content of the aromatic vinyl monomer units in the conjugated diene polymer is not particularly limited, and is preferably 0 to 60% by weight, more preferably 3 to 50% by weight, still more preferably 10 to 48% by weight, particularly preferably 20 to 45% by weight. When the content of the aromatic vinyl monomer units is within the above ranges, the silica dispersibility and the balance between fuel efficiency and durability of a cross-linked rubber to be obtained can be further improved.

The conjugated diene polymer used in the present invention may contain units of a vinyl compound containing a functional group capable of interacting with silica, in addition to the conjugated diene monomer units and the aromatic vinyl monomer units optionally contained.

The vinyl compound containing a functional group capable of interacting with silica to form the units of a vinyl compound containing a functional group capable of interacting with silica can be any compound as long as it has a functional group capable of interacting with silica and a vinyl group. For example, the compound disclosed in WO 2019/073828 can be used.

Here, the functional group capable of interacting with silica is a functional group which can form a covalent bond between the functional group and the surface of silica or can cause an intermolecular force weaker than a covalent bond (such as ion-dipole interaction, dipole-dipole interaction, hydrogen bond, or van der Waals force). Examples of such a functional group capable of interacting with silica include, but are not particularly limited to, nitrogen atom-containing functional groups, silicon atom-containing functional groups, oxygen atom-containing functional groups, and the like. Among these, silicon atom-containing functional groups are preferred from the viewpoint of high interaction with silica.

The proportion of units of the vinyl compound containing a functional group capable of interacting with silica in the conjugated diene polymer (A) is preferably 0.001 to 10.000% by weight, more preferably 0.001 to 3.000% by weight relative to 100% by weight of the total amount of monomers.

The conjugated diene polymer may also contain different monomer units other than the monomer units. Examples of a different compound to form such different monomer units include chain olefin compounds such as ethylene, propylene, and 1-butene; cyclic olefin compounds such as cyclopentene and 2-norbornene; non-conjugated diene compounds such as 1,5-hexadiene, 1,6-heptadiene, 1,7-octadiene, dicyclopentadiene, and 5-ethylidene-2-norbornene; and the like. The proportion of the different monomer units in the conjugated diene polymer is preferably 30% by weight or less, more preferably 20% by weight or less, still more preferably 10% by weight or less.

In the conjugated diene polymer, the bonding form of the monomer units can be a variety of bonding forms such as a block form, a tapered form, and a random form.

The conjugated diene polymer used in the present invention preferably contains an isoprene-containing block (A), more preferably contains an isoprene-containing block (A) at one end of the conjugated diene polymer or contains isoprene-containing blocks (A) at both ends of the conjugated diene polymer, and particularly preferably contains an isoprene-containing block (A) at least at one end of the conjugated diene polymer.

The isoprene-containing block (A) may be either a polymer block consisting of isoprene monomer units or a

polymer block containing isoprene monomer units. The content of the isoprene monomer units in the isoprene-containing block (A) is preferably 80 to 100% by weight, more preferably 85 to 99% by weight, still more preferably 88 to 97% by weight, particularly preferably 90 to 95% by weight. When the content of the isoprene monomer units in the isoprene-containing block (A) is within the above ranges, the compatibility between the conjugated diene polymer and silica can be further improved, the silica dispersibility can be further improved, leading to further improved product stability, and fuel efficiency and durability of a cross-linked rubber to be obtained can be further improved.

In the isoprene-containing block (A), the amount of vinyl bond in the isoprene monomer units is preferably 1 to 90 mol%, more preferably 3 to 80 mol%, still more preferably 5 to 70 mol%. When the vinyl bond content in the isoprene monomer units is within the above ranges, the silica dispersibility and the balance between fuel efficiency and durability of a cross-linked rubber to be obtained can be further improved. In the present specification, the vinyl bond content in the isoprene monomer units refers to a proportion of the total amount of isoprene monomer units having a 3,4-structure and isoprene monomer units having a 1,2-structure in the isoprene monomer units.

The isoprene-containing block (A) preferably contains aromatic vinyl monomer units in addition to the isoprene monomer units. Examples of aromatic vinyl monomers to form the aromatic vinyl monomer units include those listed above. Among these, styrene is preferred. These aromatic vinyl monomers may be used alone or in combination.

The content of the aromatic vinyl monomer units in the isoprene-containing block (A) is preferably 0 to 20% by weight, more preferably 1 to 15% by weight, still more preferably 3 to 12% by weight, particularly preferably 5 to 10% by weight. When the content of the aromatic vinyl monomer units in the isoprene-containing block (A) is within the above ranges, the silica dispersibility and the balance between fuel efficiency and durability of a cross-linked rubber to be obtained can be further improved.

The isoprene-containing block (A) preferably consists only of isoprene monomer units or consists only of isoprene monomer units and aromatic vinyl monomer units, particularly preferably consists only of isoprene monomer units and aromatic vinyl monomer units, but may optionally further contain different monomer units in addition to the isoprene monomer units and the aromatic vinyl monomer units as long as the essential features of the present invention are not impaired. Examples of different monomers which can be used to form the different monomer units include conjugated diene monomers other than isoprene, such as 1,3-butadiene, 2,3-dimethyl-1,3-butadiene, 2-chloro-1,3-butadiene, 1,3-pentadiene, and 1,3-hexadiene, and also include those listed above as the vinyl compound containing a functional group capable of interacting with silica to form the units of a vinyl compound containing a functional group capable of interacting with silica and those listed above as the different compound to form the different monomer units. These different monomer units may be used alone or in combination. The proportion of the different monomer units in the isoprene-containing block (A) is preferably 15% by weight or less, more preferably 10% by weight or less, still more preferably 6% by weight or less.

The weight average molecular weight (Mw) of the isoprene-containing block (A) is preferably 500 to 15,000, more preferably 1,000 to 12,000, particularly preferably 1,500 to 10,000 as a value determined against polystyrene standards in gel permeation chromatography. When the weight average molecular weight of the isoprene-containing block (A) is within the above ranges, the silica dispersibility can be further improved, leading to further improved product stability, and fuel efficiency and durability of a cross-linked rubber to be obtained can be further improved.

The molecular weight distribution of the isoprene-containing block (A), which is represented as a ratio (Mw/Mn) of the weight average molecular weight (Mw) to the number average molecular weight (Mn), is preferably 1.0 to 1.5, more preferably 1.0 to 1.3. When the molecular weight distribution (Mw/Mn) of the isoprene-containing block (A) is within the above ranges, the conjugated diene polymer can be more easily produced.

When the isoprene-containing block (A) contains the isoprene-containing block (A), the conjugated diene polymer preferably further contains a butadiene-containing block (B), and more preferably contains an isoprene-containing block (A) and a butadiene-containing block (B) that are serially linked to each other. When the conjugated diene polymer having such a block structure is used, the compatibility between the conjugated diene polymer and silica can be further improved, the silica dispersibility can be further improved, leading to further improved product stability, and fuel efficiency and durability of a cross-linked rubber to be obtained can be further improved.

The butadiene-containing block (B) is a polymer block containing 1,3-butadiene units. The content of the 1,3-butadiene units in the butadiene-containing block (B) is not particularly limited, and is preferably 30 to 100% by weight, more preferably 35 to 95% by weight, still more preferably 40 to 90% by weight, particularly preferably 45 to 80% by weight, most preferably 50 to 70% by weight. When the content of the 1,3-butadiene units is within the above ranges, the silica dispersibility and the balance between fuel efficiency and durability of a cross-linked rubber to be obtained can be further improved.

In the butadiene-containing block (B), the amount of vinyl bond in the 1,3-butadiene units is preferably 1 to 90 mol%, more preferably 3 to 80 mol%, still more preferably 5 to 70 mol%. When the amount of vinyl bond in the 1,3-butadiene units is within the above ranges, the silica dispersibility and the balance between fuel efficiency and durability of a cross-linked rubber to be obtained can be further improved.

In addition to the 1,3-butadiene units, the butadiene-containing block (B) preferably contains aromatic vinyl

monomer units and/or isoprene monomer units, and more preferably contains aromatic vinyl monomer units. Examples of aromatic vinyl monomers to form the aromatic vinyl monomer units include those listed above. Among these, styrene is preferred. These aromatic vinyl monomers may be used alone or in combination.

The content of the aromatic vinyl monomer units in the butadiene-containing block (B) is not particularly limited, and is preferably 0 to 70% by weight, more preferably 5 to 65% by weight, still more preferably 10 to 60% by weight, even more preferably 15 to 55% by weight, particularly preferably 20 to 55% by weight, most preferably 30 to 50% by weight. When the content of the aromatic vinyl monomer units is within the above ranges, the silica dispersibility and the balance between fuel efficiency and durability of a cross-linked rubber to be obtained can be further improved.

The content of the isoprene monomer units in the butadiene-containing block (B) is not particularly limited, and the upper limit of the content is preferably 10% by weight or less, more preferably 9% by weight or less, still more preferably 7% by weight or less. When the butadiene-containing block (B) contains isoprene monomer units, the lower limit of the content is preferably 0.1% by wight or more, more preferably 1% by wight or more, still more preferably 2% by wight or more. When the content of the isoprene monomer units is within the above ranges, the silica dispersibility and the balance between fuel efficiency and durability of a cross-linked rubber to be obtained can be further improved.

The butadiene-containing block (B) preferably consists only of 1,3-butadiene monomer units and aromatic vinyl monomer units, or consists only of 1,3-butadiene monomer units, aromatic vinyl monomer units, and isoprene monomer units, and particularly preferably consists only of 1,3-butadiene monomer units and aromatic vinyl monomer units, but may optionally further contain different monomer units in addition to the 1,3-butadiene monomer units and the aromatic vinyl monomer units as long as the essential features of the present invention are not impaired. Examples of different monomers which can be used to form the different monomer units include conjugated diene monomers other than 1,3-butadiene, such as isoprene, 2,3-dimethyl-1,3-butadiene, 2-chloro-1,3-butadiene, 1,3-pentadiene, and 1,3-hexadiene; $\alpha,\beta$-unsaturated nitriles such as acrylonitrile and methacrylonitrile; unsaturated carboxylic acids or acid anhydrides such as acrylic acid, methacrylic acid, and maleic anhydride; ethylenically unsaturated carboxylic acid esters such as methyl methacrylate, ethyl acrylate, and butyl acrylate; non-conjugated dienes such as 1,5-hexadiene, 1,6-heptadiene, 1,7-octadiene, dicyclopentadiene, and 5-ethylidene-2-norbornene; and the like. These different monomers may be used alone or in combination. The proportion of the different monomer units in the butadiene-containing block (B) is preferably 15% by weight or less, more preferably 10% by weight or less, still more preferably 6% by weight or less.

When the conjugated diene polymer used in the present invention contains an isoprene-containing block (A) and a butadiene-containing block (B), the weight ratio of the isoprene-containing block (A) to the butadiene-containing block (B), that is, (weight of isoprene-containing block (A))/(weight of butadiene-containing block (B)) (when a plurality of isoprene-containing blocks (A) and a plurality of butadiene-containing blocks (B) are present, weight ratio of the total weight of the isoprene-containing blocks (A) to the total weight of the butadiene-containing blocks (B)) is preferably 0.001 to 0.1, more preferably 0.003 to 0.070, particularly preferably 0.005 to 0.05. When the weight ratio of the isoprene-containing block (A) to the butadiene-containing block (B) is within the above ranges, a cross-linked rubber having good balance between strength and low heat buildup can be obtained.

The conjugated diene polymer used in the present invention preferably contains a modifying group formed by modifying a terminal of the polymer chain of the conjugated diene polymer with a modifier. That is, the conjugated diene polymer used in the present invention preferably contains a modifying group formed with a modifier.

From the viewpoint of capability of further improving compatibility with silica, further improving silica dispersibility and thus providing further improved product stability, and further improving the fuel efficiency and durability of a cross-linked rubber to be obtained, a preferred modifying group contains a functional group capable of interacting with silica. Here, the functional group capable of interacting with silica indicates a functional group which can form a covalent bond between the functional group and the surface of silica or can cause an intermolecular force weaker than a covalent bond (such as ion-dipole interaction, dipole-dipole interaction, hydrogen bond, or van der Waals force). Examples of such a functional group capable of interacting with silica include, but are not particularly limited to, nitrogen atom-containing functional groups, silicon atom-containing functional groups, oxygen atom-containing functional groups, and the like.

From the viewpoint of high interaction with silica, preferred modifiers to form the modifying group are silicon atom-containing modifiers having a silicon atom-containing functional group and nitrogen atom-containing modifiers having a nitrogen atom-containing functional group, and more preferred modifiers are silicon atom-containing modifiers. That is, the conjugated diene polymer used in the present invention preferably contains a silicon atom-containing functional group formed with a silicon atom-containing modifier or a nitrogen atom-containing functional group formed with a nitrogen atom-containing modifier, and more preferably contains a silicon atom-containing functional group formed with a silicon atom-containing modifier. Examples of silicon atom-containing modifiers include siloxane compounds, hydrocarbyloxysilane compounds, and the like. Examples of nitrogen atom-containing modifiers include N,N-disubstituted aminoalkyl(meth) acrylamides such as dimethylaminoethylacrylamide, diethylaminoethylacrylamide, dimethylaminopropylacrylamide, diethylaminopropylacrylamide, dimethylaminobutylacrylamide, diethylaminobutylacrylamide, dimethylaminoethylmethacrylamide, diethylaminoethylmethacrylamide, dimethylaminopropylmethacrylamide, diethylaminopropylmethacrylamide, dimethylaminobutylmethacrylamide, and diethylaminobutylmethacrylamide; amino group-containing alkoxysilane compounds such as [3-(dimethylamino)propyl]trimethoxysilane, [3-(diethylamino)propyl]trimethoxysilane, [3-(dimethylamino)propyl]triethoxysilane, [3-(diethylamino)propyl]triethoxysilane, [3-(ethylmethylamino)propyl]trimethoxysilane, and [3-(ethylmethylamino)propyl]triethoxysilane; and pyrrolidone compounds such as N-phenyl-2-pyrrolidone, N-methyl-2-pyrrolidone, N-ethyl-2-pyrrolidone, and 1-cyclohexyl-2-pyrrolidone.

The conjugated diene polymer used in the present invention preferably contains a silicon atom-containing functional group formed with a siloxane compound as a silicon atom-containing modifier. The siloxane compounds can be any siloxane compounds as long as they have a siloxane structure (-Si-O-) as the main chain structure. Preferred are organosiloxanes having an organic group in a side chain, and more preferred is a polyorganosiloxane represented by General Formula (4) below:

[Chem. 1]

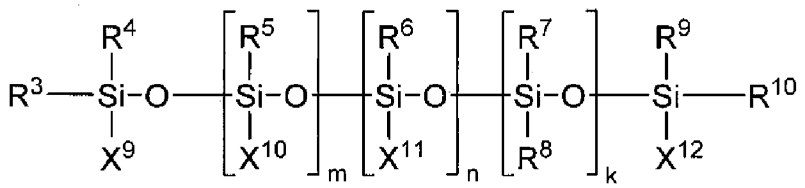

(4)

In General Formula (4) above, $R^3$ to $R^{10}$ are each a $C_1$ to $C_6$ alkyl group or a $C_6$ to $C_{12}$ aryl group, and may be the same or different. $X^9$ and $X^{12}$ are each one group selected from the group consisting of $C_1$ to $C_6$ alkyl groups, $C_6$ to $C_{12}$ aryl groups, $C_1$ to $C_5$ alkoxy groups, and $C_4$ to $C_{12}$ groups having an epoxy group, and may be the same or different. $X^{10}$ is a $C_1$ to $C_5$ alkoxy group or a $C_4$ to $C_{12}$ group having an epoxy group. When a plurality of $X^{10}$ is present, these may be the same or different. $X^{11}$ is a group containing 2 to 20 repeating units of an alkylene glycol. When a plurality of $X^{11}$ is present, these may be the same or different. m is an integer of 0 to 200, n is an integer of 0 to 200, k is an integer of 0 to 200, and m+n+k is 1 or more.

In the polyorganosiloxane represented by General Formula (4) above, examples of the $C_1$ to $C_6$ alkyl groups which can form $R^3$ to $R^{10}$, $X^9$, and $X^{12}$ in General Formula (4) above include a methyl group, an ethyl group, an n-propyl group, an isopropyl group, a butyl group, a pentyl group, a hexyl group, a cyclohexyl group, and the like. Examples of the $C_6$ to $C_{12}$ aryl groups include a phenyl group, a methylphenyl group, and the like. Among these, methyl and ethyl groups are preferred from the viewpoint of ease in production of the polyorganosiloxane itself.

In the polyorganosiloxane represented by General Formula (4) above, examples of the $C_1$ to $C_5$ alkoxy groups which can form $X^9$, $X^{10}$, and $X^{12}$ include a methoxy group, an ethoxy group, a propoxy group, an isopropoxy group, a butoxy group, and the like. Among these, methoxy and ethoxy groups are preferred from the viewpoint of ease in production of the polyorganosiloxane itself.

Furthermore, in the polyorganosiloxane represented by General Formula (4) above, examples of the $C_4$ to $C_{12}$ groups having an epoxy group which can form $X^9$, $X^{10}$, and $X^{12}$ include groups represented by General Formula (5) below:

$$-Z^1-Z^2-E^1 \qquad (5)$$

In General Formula (5) above, $Z^1$ is a $C_1$ to $C_{10}$ alkylene or alkylarylene group, $Z^2$ is a methylene group, a sulfur atom, or an oxygen atom, and $E^1$ is a $C_2$ to $C_{10}$ hydrocarbon group having an epoxy group.

The groups represented by General Formula (5) above are preferably those where $Z^2$ is an oxygen atom, more preferably those where $Z^2$ is an oxygen atom and $E^1$ is a glycidyl group, particularly preferably those where $Z^1$ is a $C_1$ to $C_3$ alkylene group, $Z^2$ is an oxygen atom, and $E^1$ is a glycidyl group.

In the polyorganosiloxane represented by General Formula (4) above, $X^9$ and $X^{12}$ are preferably a $C_4$ to $C_{12}$ group containing an epoxy group or a $C_1$ to $C_6$ alkyl group among the groups described above. $X^{10}$ is preferably a $C_4$ to $C_{12}$ group containing an epoxy group among the groups described above. Furthermore, it is more preferred that $X^9$ and $X^{12}$ be $C_1$ to $C_6$ alkyl groups, and $X^{10}$ be a $C_4$ to $C_{12}$ group containing an epoxy group.

In the polyorganosiloxane represented by General Formula (4) above, $X^{11}$, namely, the group containing 2 to 20 repeating units of an alkylene glycol is preferably a group represented by General Formula (6) below:

[Chem. 2]

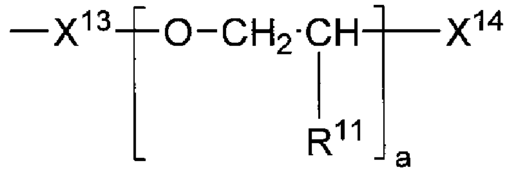

(6)

In General Formula (6) above, a is an integer of 2 to 20, $X^{13}$ is a $C_2$ to $C_{10}$ alkylene or alkylarylene group, $R^{11}$ is a hydrogen atom or a methyl group, and $X^{14}$ is a $C_1$ to $C_{10}$ alkoxy or aryloxy group. Among these, preferred groups are those where a is an integer of 2 to 8, $X^{13}$ is a $C_3$ alkylene group, $R^{11}$ is a hydrogen atom, and $X^{14}$ is a methoxy group.

In the polyorganosiloxane represented by General Formula (4) above, m is an integer of 0 to 200, preferably 20 to 150, more preferably 30 to 120. With m of 200 or less, the polyorganosiloxane itself represented by General Formula (4) above can be more readily produced, and can be more easily handled because the viscosity is not excessively high.

In the polyorganosiloxane represented by General Formula (4) above, n is an integer of 0 to 200, preferably 0 to 150, more preferably 0 to 120. k is an integer of 0 to 200, preferably 0 to 150, more preferably 0 to 130. The total numeric number of m, n, and k is 1 or more, preferably 2 to 400, more preferably 20 to 300, particularly preferably 30 to 250. If the total numeric number of m, n, and k is 1 or more, in the production process of the conjugated diene polymer, the reaction of the polyorganosiloxane represented by General Formula (4) above with an active terminal of the conjugated diene polymer readily proceeds. Furthermore, if the total numeric number of m, n, and k is 400 or less, the polyorganosiloxane itself represented by General Formula (4) above can be more readily produced, and can be more easily handled because the viscosity is not excessively high.

As the modifier to form the modifying group, a nitrogen atom-containing modifier having a nitrogen atom-containing functional group may be used, and for example, a hydrocarbyloxysilane compound containing a nitrogen atom may be used.

The hydrocarbyloxysilane compound containing a nitrogen atom is a silicon-containing compound having at least one group containing a nitrogen atom and at least one hydrocarbyloxy group. Such a hydrocarbyloxysilane compound containing a nitrogen atom is not particularly limited, and a compound described in WO 2019/189204 can be used.

The weight average molecular weight (Mw) of the conjugated diene polymer used in the present invention is not particularly limited, and is preferably 50,000 to 5,000,000, more preferably 75,000 to 3,000,000, particularly preferably 100,000 to 1,000,000 as a value determined against polystyrene standards in gel permeation chromatography. When the weight average molecular weight (Mw) of the conjugated diene polymer is within the above ranges, the processability can be improved, and the silica dispersibility and the balance between fuel efficiency and durability of a cross-linked rubber to be obtained can be further improved.

The molecular weight distribution of the conjugated diene polymer used in the present invention, which is represented as a ratio (Mw/Mn) of the weight average molecular weight (Mw) to the number average molecular weight (Mn), is preferably 1.1 to 3.0, more preferably 1.2 to 2.5, particularly preferably 1.2 to 2.2. When the molecular weight distribution (Mw/Mn) of the conjugated diene polymer is within the above ranges, the processability can be improved, and the silica dispersibility and the balance between fuel efficiency and durability of a cross-linked rubber to be obtained can be further improved.

The Mooney viscosity (ML1+4, 100°C) of the conjugated diene polymer used in the present invention is not particularly limited, and is preferably 10 to 200, more preferably 15 to 150, still more preferably 20 to 135, particularly preferably 25 to 125. When the Mooney viscosity is within the above ranges, the processability can be improved, and the silica dispersibility and the balance between fuel efficiency and durability of a cross-linked rubber to be obtained can be further improved. The Mooney viscosity (ML1+4, 100°C) is measured according to JIS K6300-1.

From the viewpoint of handling properties, the conjugated diene polymer used in the present invention can be suitably used in an admixture with an extender oil describe later. When the conjugated diene polymer is used in an admixture with an extender oil, the Mooney viscosity (ML1+4) of the conjugated diene polymer admixed with an extender oil (oil-extended conjugated diene polymer) can be determined as a Mooney viscosity (ML1+4) of the conjugated diene polymer. In this case, the preferred ranges of the Mooney viscosity (ML1+4) or the method for the measurement thereof are the same as those describe above.

The rubber composition according to the present invention may contain one conjugated diene polymer alone or two or more conjugated diene polymers. The rubber composition according to the present invention preferably contains a solution polymerized styrene-butadiene-isoprene copolymer rubber and a different conjugated diene polymer other than the solution polymerized styrene-butadiene-isoprene copolymer rubber as conjugated diene polymers. The solution polymerized styrene-butadiene-isoprene copolymer rubber is not particularly limited as long as it can be obtained by solution polymerization of a monomer mixture containing styrene, 1,3-butadiene, and isoprene.

Examples of the different conjugated diene polymer other than the solution polymerized styrene-butadiene-isoprene copolymer rubber include natural rubbers (which may be reformed natural rubbers such as epoxidized natural rubber (ENR), hydrogenated natural rubber (HNR), deproteinized natural rubber (DPNR), ultra pure natural rubber (UPNR), and grafted natural rubber), polyisoprene rubbers, emulsion-polymerized styrene-butadiene copolymer rubbers, polybutadiene rubbers (which may be high-cis BR or low cis BR, or may be polybutadiene rubbers containing crystal fibers formed of a 1,2-polybutadiene polymer), styrene-butadiene copolymer rubbers, styrene-isoprene copolymer rubbers, butadiene-isoprene copolymer rubbers, acrylonitrile-butadiene copolymer rubbers, acrylonitrile-styrene-butadiene copolymer rubbers, butyl rubbers (IIR), chloroprene rubbers, nitrile chloroprene rubbers, and nitrile isoprene rubbers. Among these, preferred are polybutadiene rubbers, natural rubbers, and styrene-butadiene copolymer rubbers, and more preferred are polybutadiene rubbers.

The proportion of the conjugated diene polymer in the rubber composition according to the present invention is preferably 10 to 90% by weight, more preferably 20 to 70% by weight, still more preferably 30 to 50% by weight. When the proportion of the conjugated diene polymer is within the above ranges, the processability can be improved, and the balance between fuel efficiency and durability of a cross-linked rubber to be obtained can be further improved.

[Method for producing conjugated diene polymer]

The conjugated diene polymer used in the present invention can be obtained, for example, by polymerizing a monomer mixture containing at least a conjugated diene compound in an inert solvent using a polymerization initiator. The conjugated diene polymer used in the present invention is preferably obtained by a solution polymerization method.

The monomer mixture can be any monomer mixture containing a conjugated diene compound, and the monomer can be selected according to the target monomer composition of the conjugated diene polymer.

The inert solvent used in polymerization can be any inert solvent as long as it is usually used in solution polymerization and does not inhibit a polymerization reaction. Specific examples of the inert solvent include chain aliphatic hydrocarbons such as butane, pentane, hexane, heptane, and 2-butene; alicyclic hydrocarbons such as cyclopentane, cyclohexane, and cyclohexene; aromatic hydrocarbons such as benzene, toluene, and xylene; and the like. These inert solvents may be used alone or in combination. The inert solvent is used in an amount providing a monomer concentration of 1 to 50% by weight, preferably 10 to 40% by weight, for example.

The polymerization initiator used in polymerization can be any polymerization initiator as long as it can polymerize a monomer mixture containing a conjugated diene compound. Specific examples thereof include organic alkali metal compounds, organic alkaline earth metal compounds, polymerization initiators containing a lanthanum-series metal compound as a primary catalyst, and the like. Examples of organic alkali metal compounds include organic lithium compounds, organic sodium compounds, organic potassium compounds, and the like. Specifically, examples thereof include organic monolithium compounds such as n-butyllithium, sec-butyllithium, t-butyllithium, hexyllithium, phenyllithium, and stilbenelithium; organic polyvalent lithium compounds such as dilithimethane, 1,4-dilithiobutane, 1,4-dilithio-2-ethylcyclohexane, 1,3,5-trilithiobenzene, and 1,3,5-tris(lithiomethyl)benzene; organic sodium compounds such as sodium naphthalene; organic potassium compounds such as potassium naphthalene; and the like. Examples of organic alkaline earth metal compounds include di-n-butylmagnesium, di-n-hexylmagnesium, diethoxycalcium, calcium distearate, di-t-butoxystrontium, diethoxybarium, diisopropoxybarium, diethylmercaptobarium, di-t-butoxybarium, diphenoxybarium, diethylaminobarium, barium distearate, diketylbarium, and the like. Examples of polymerization initiators containing a lanthanum-series metal compound as a primary catalyst include polymerization initiators containing a lanthanum-series metal salt of a lanthanum-series metal, such as lanthanum, cerium, praseodymium, neodymium, samarium, or gadolinium, and a carboxylic acid, a phosphorus-containing organic acid, or the like as a primary catalyst, and a cocatalyst such as an alkylaluminum compound, an organic aluminum hydride compound, or an organic aluminum halide compound; and the like. Among these polymerization initiators, organic monolithium compounds and organic polyvalent lithium compounds are preferably used, organic monolithium compounds are more preferably used, and n-butyllithium is particularly preferably used. The organic alkali metal compound may be preliminarily reacted with a secondary amine compound such as dibutylamine, dihexylamine, dibenzylamine, pyrrolidine, piperidine, hexamethyleneimine, or heptamethyleneimine, and may be used as an organic alkali metal amide compound. By using an organic alkali metal amide compound as the polymerization initiator, a cross-linked rubber having further enhanced fuel efficiency and mechanical strength can be obtained. These polymerization initiators may be used alone or in combination.

Although the amount of the polymerization initiator to be used can be determined according to the molecular weight distribution curve of the target conjugated diene polymer, the amount is usually in the range of 1 to 50 mmol, preferably 1.5 to 20 mmol, more preferably 2 to 15 mmol per 1000 g of the monomer(s).

The polymerization temperature is usually in the range of -80 to +150°C, preferably 0 to 100°C, more preferably 30 to 90°C. The polymerization can be performed in any manner such as a batch or continuous mode. Preferred is a batch mode because the randomness in bonding of the conjugated diene monomer units and the aromatic vinyl monomer units can be readily controlled.

In polymerization of the monomer mixture containing the conjugated diene compound, a polar compound is preferably added to an inert organic solvent to control the vinyl bond content in conjugated diene monomer units in the conjugated diene polymer to be prepared. Examples of the polar compound include ether compounds such as dibutyl ether and tetrahydrofuran; tertiary amines such as tetramethylethylenediamine; alkali metal alkoxides; phosphine compounds; and the like. Among these, ether compounds and tertiary amines are preferred, tertiary amines are more preferred, and tetramethylethylenediamine is particularly preferred. These polar compounds may be used alone or in combination. The amount of the polar compound to be used can be determined according to the target vinyl bond content, and is preferably 0.001 to 100 mol, more preferably 0.01 to 10 mol relative to 1 mol of the polymerization initiator. When the amount of the polar compound used is within the above ranges, control of the vinyl bond content in the conjugated diene monomer units is facilitated, and failure caused by deactivation of the polymerization initiator hardly occurs.

The conjugated diene polymer used in the present invention may be produced by a production method comprising a step of polymerizing a monomer (a) containing isoprene in an inert solvent using a polymerization initiator to form an isoprene-containing block (A) having an active terminal, and a step of mixing the isoprene-containing block (A) having an active terminal with a monomer (b) containing 1,3-butadiene, and allowing the polymerization reaction to continue to produce the isoprene-containing block (A) and a butadiene-containing block (B) that are serially linked to each other.

The monomer (a) to form the isoprene-containing block (A) can be any monomer containing isoprene, and the monomer can be selected according to the monomer composition of the isoprene-containing block (A) to be formed.

As the inert solvent used to form the isoprene-containing block (A), the same inert solvents as those listed above can be used. The inert solvent is used in an amount such that the concentration of the monomer is preferably 1 to 80% by weight, more preferably 10 to 50% by weight.

The polymerization initiator used to form the isoprene-containing block (A) is not particularly limited as long as it can polymerize a monomer (a) containing isoprene to give a polymer chain having an active terminal. Specifically, the same polymerization initiators as those listed above can be used. The amount of the polymerization initiator used can be determined according to the target molecular weight, and is preferably in the range of 4 to 250 mmol, more preferably 6 to 200 mmol, particularly preferably 10 to 70 mmol per 100 g of the monomer (a) containing isoprene.

The polymerization temperature in polymerization of the monomer (a) containing isoprene is preferably in the range of -80 to +150°C, more preferably 0 to 100°C, still more preferably 20 to 90°C. The polymerization can be performed in any manner such as a batch or continuous mode. The bonding form of the monomers to form a copolymer chain containing the isoprene-containing block (A) can be a variety of bonding forms such as a block form, a tapered form, and a random form.

A polar compound is preferably added to an inert solvent in polymerization to control the vinyl bond content in isoprene monomer units in the isoprene-containing block (A). As the polar compound, the same polar compounds as those listed above can be used. The amount of the polar compound to be used can be determined according to the target vinyl bond content, and is preferably 0.01 to 30 mol, more preferably 0.05 to 10 mol relative to 1 mol of the polymerization initiator. When the amount of the polar compound used is within the above ranges, control of the vinyl bond content in the isoprene monomer units is easy, and failure caused by deactivation of the polymerization initiator hardly occurs. In addition, when the amount of the polar compound used is increased within the above ranges, the vinyl bond content in the isoprene monomer units can be increased.

The butadiene-containing block (B) that is serially linked to the isoprene-containing block (A) is formed by mixing the isoprene-containing block (A) having an active terminal with the monomer (b) containing 1,3-butadiene, and allowing the polymerization reaction to continue. The resulting butadiene-containing block (B) has an active terminal. On the other hand, the active terminal of the isoprene-containing block (A) disappears.

The inert solvent used for the polymerization of the isoprene-containing block (A) with the monomer (b) containing 1,3-butadiene to form the butadiene-containing block (B) is not particularly limited, and the same inert solvents as those listed above can be used.

The amount of the isoprene-containing block (A) having an active terminal used to form the butadiene-containing block (B) can be determined according to a target molecular weight, and is preferably in the range of 0.1 to 5 mmol, more preferably 0.15 to 2 mmol, still more preferably 0.2 to 1.5 mmol per 100 g of the monomer (b) containing 1,3-butadiene.

The mixing method of mixing the isoprene-containing block (A) with the monomer (b) containing 1,3-butadiene is not particularly limited. The isoprene-containing block (A) having an active terminal may be added to a solution of the monomer (b) containing 1,3-butadiene, or the monomer (b) containing 1,3-butadiene may be added to a solution of the isoprene-containing block (A) having an active terminal. From the viewpoint of controlling the polymerization, a preferred method is adding the isoprene-containing block (A) having an active terminal to a solution of the monomer (b) containing 1,3-butadiene.

The polymerization temperature in polymerization of the monomer (b) containing 1,3-butadiene is preferably in the range of -80 to +150°C, more preferably 0 to 100°C, still more preferably 20 to 90°C. The polymerization can be performed in any manner such as a batch or continuous mode. The bonding form of the monomers to form a copolymer

chain containing the butadiene-containing block (B) is preferably a batch mode because the randomness in bonding can be readily controlled.

The bonding form of the monomers to form a copolymer chain containing the butadiene-containing block (B) can be a variety of bonding forms such as a block form, a tapered form, and a random form. Among these, a random form is preferred. When the random form is used, the fuel efficiency of a cross-linked rubber to be obtained can be further improved.

In one embodiment of the present invention, as in the the case of controlling the vinyl bond content in isoprene monomer units in the isoprene-containing block (A), a polar compound is preferably added to an inert solvent in polymerization to control the vinyl bond content in 1,3-butadiene monomer units in the butadiene-containing block (B). However, when the amount of a polar compound added to an inert solvent in the preparation of the isoprene-containing block (A) is sufficient to control the vinyl bond content in 1,3-butadiene monomer units in the butadiene-containing block (B), further addition of the polar compounds is not needed. As the polar compound used to control the vinyl bond content, the same polar compounds as those listed above can be used. The amount of the polar compound to be used can be determined according to the target vinyl bond content, and can be controlled to fall within the range of preferably 0.01 to 100 mol, more preferably 0.1 to 30 mol relative to 1 mol of the polymerization initiator used in the first polymerization reaction (i.e., the polymerization reaction to form the first isoprene-containing block (A)). When the amount of the polar compound used is within the above ranges, control of the vinyl bond content in the 1,3-butadiene monomer units is easy, and failure caused by deactivation of the polymerization initiator hardly occurs.

As describe above, a polymer chain having an active terminal and containing the isoprene-containing block (A) and the a butadiene-containing block (B) can be obtained. From the viewpoint of productivity, the polymer chain having an active terminal is preferably constituted by isoprene-containing block (A)-butadiene-containing block (B) and has an active terminal at the end of the butadiene-containing block (B). However, the polymer chain having an active terminal may have a plurality of isoprene-containing blocks (A), and may have other polymer blocks. Examples thereof include a polymer chain having an active terminal, such as isoprene-containing block (A)-butadiene-containing block (B)-isoprene-containing block (A). In this case, the active terminal is formed at the end of the isoprene-containing block (A) that is formed following the butadiene-containing block (B). When the isoprene-containing block (A) is formed on the active terminal side of the conjugated diene polymer, the amount of isoprene used is preferably 10 to 100 mol, more preferably 15 to 70 mol, particularly preferably 20 to 35 mol relative to 1 mol of the polymerization initiator used in the first polymerization reaction (i.e., the polymerization reaction to form the first isoprene-containing block (A)).

As described above, conjugated diene polymer chains can be prepared in the inert solvent. Usually, the conjugated diene polymer chains thus prepared have active terminals.

The conjugated diene polymer chains having active terminals can be reacted with a coupling agent to form coupled polymer chains. Examples of the coupling agent include, but are not particularly limited to, silicon tetrachloride, methyltrichlorosilane, dimethyldichlorosilane, trimethylchlorosilane, tin tetrachloride, methyltrichlorotin, dimethyldichlorotin, trimethylchlorotin, tetramethoxysilane, methyltrimethoxysilane, dimethoxydimethylsilane, methyltriethoxysilane, ethyltrimethoxysilane, dimethoxydiethylsilane, diethoxydimethylsilane, tetraethoxysilane, ethyltriethoxysilane, diethoxydiethylsilane, bis(trichlorosilyl)methane, 1,2-bis(trichlorosilyl)ethane, 1,3-bis(trichlorosilyl)propane, 1,4-bis(trichlorosilyl)butane, 1,5-bis(trichlorosilyl)pentane, 1,6-bis(trichlorosilyl)hexane, and the like. Among the modifiers listed above, those having coupling activity are also preferably used as a coupling agent. Although the coupling agent can be selected according to the molecular weight distribution curve of the target conjugated diene polymer, use of a tri- or higher functional coupling agent is preferred, and use of a tetra- or higher functional coupling agent is more preferred.

When the coupling agent is used, preferably, the polymer chains having active terminals obtained by the above polymerization method are partially subjected to a coupling reaction to form coupled polymer chains, thus obtaining a solution containing the polymer chains having active terminals and coupled polymer chains. In this case, the amount of the coupling agent used is not particularly limited, and can be selected according to the molecular weight distribution curve of the target conjugated diene polymer. The amount thereof is preferably 0.01 to 0.4 mol, more preferably 0.02 to 0.3 mol in terms of the functional group of the coupling agent relative to 1 mol of the polymerization initiator used at the start of polymerization. As a result of addition of the coupling agent, the active terminals of the polymer chains having active terminals are subjected to a coupling reaction. Thus, the polymer chains reacted in the coupling reaction lose their active terminals, and have no active terminals, while the polymer chains not reacted in the coupling reaction maintain their active terminals.

Preferably, the conjugated diene polymer is converted into a conjugated diene polymer having a modifying group by reacting the active terminals contained in the conjugated diene polymer chains prepared by polymerization or those contained in the conjugated diene polymer chains after the coupling reaction with a modifier. As the modifier, those listed as the modifier to form the modifying group which can be contained in the conjugated diene polymer used in the present invention can be used.

When the active terminals of the conjugated diene polymer chains are reacted with the modifier, the amount of the modifier used is not particularly limited, and the amount is preferably 0.01 to 10.0 mol, more preferably 0.02 to 5.0 mol,

particularly preferably 0.05 to 2.0 mol as the amount of the modifier relative to 1 mol of the active terminals in the polymer chains having active terminals (the amount of the modifier relative to 1 mol of a metal atom in an organic alkali metal compound when the organic alkali metal compound is used as the polymerization initiator). As the modifier, those listed above can be used. These may be used alone or in combination.

Examples of the method of reacting the active terminals of the conjugated diene polymer chains with the modifier include, but are not particularly limited to, a method of mixing the polymer chains having active terminals and the modifier in a solvent which can dissolve these; and the like. Examples of the solvent used at this time include the same solvents as those used in polymerization of the conjugated diene polymer described above. At this time, for its simplicity, preferred is a method of adding the modifier to the polymerization solution used in the polymerization in the state where the polymer chains having active terminals prepared above are contained as they are in the polymerization solution. At this time, the modifier may be added to the polymerization system in the form of a solution of an inert solvent used in the polymerization, and the solution concentration is preferably in the range of 1 to 50% by weight. The reaction temperature is not particularly limited, and is usually 0 to 120°C. The reaction time is not particularly limited, and is usually 1 minute to 1 hour.

The modifier can be added to the solution containing the polymer chains having active terminals at any timing. Desirably, the modifier is added to the solution in the state where the polymerization reaction has not completed and the solution containing the polymer chains having active terminals also contains the monomer(s), more specifically, in the state where the solution containing the polymer chains having active terminals contains 100 ppm or more, more preferably 300 to 50,000 ppm of the monomer(s). Such addition of the modifier can suppress a side reaction between the polymer chains having active terminals and impurities contained in the polymerization system, and enables successful control of the reaction.

A polymerization terminator, such as an alcohol such as methanol and isopropanol or water, is preferably added to the active terminals of the conjugated diene polymer chains prepared through the polymerization or residual active terminals which can be left after reacting with a coupling agent or a modifier, as need, to deactivate unreacted active terminals.

After the active terminal of the conjugated diene polymer chain is deactivated, an antioxidant such as a phenol-based stabilizer, a phosphorus-based stabilizer, or a sulfur-based stabilizer, a crumb forming agent, a scale inhibitor, and the like are added to the polymerization solution as needed. Subsequently, the polymerization solvent is separated from the polymerization solution by direct drying, steam stripping, or the like to recover the conjugated diene polymer. The conjugated diene polymer can be recovered as an oil-extended conjugated diene polymer by mixing an extender oil with the polymerization solution before the polymerization solvent is separated from the polymerization solution.

Examples of the extender oil used to recover the conjugated diene polymer as an oil-extended conjugated diene polymer include petroleum-based softening agents such as paraffinic, aromatic, and naphthenic softening agents, plant-derived softening agents, vegetable oil, fatty acids, and the like. When an petroleum-based softening agent is used, the content of polycyclic aromatic compounds extracted by the method of IP346 (i.e., test method of THE INSTITUTE PETROLEUM of UK) is preferably less than 3%. When an extender oil is used, the amount thereof used is preferably 1 to 100 parts by weight, more preferably 3 to 60 parts by weight, still more preferably 5 to 40 parts by weight relative to 100 parts by weight of the conjugated diene polymer.

[Silica]

The rubber composition according to the present invention contains silica in addition to the conjugated diene polymer described above.

Examples of silica include dry white carbon, wet white carbon, colloidal silica, precipitated silica, calcium silicate, aluminum silicate, and the like. Among these, wet white carbon containing hydrous silicic acid as the main component is preferred. A carbon-silica dual phase filler comprising carbon black and silica carried on the surface thereof may be used. These silicas may be used alone or in combination. The nitrogen adsorption specific surface area (measured by the BET method according to ASTM D3037-81) of the silica to be used is preferably 20 to 400 $m^2/g$, more preferably 50 to 220 $m^2/g$, particularly preferably 80 to 200 $m^2/g$. The silica preferably has a pH of 5 to 10.

As the silica, a variety of commercially available silicas can be used, for example. Examples thereof include "Hi-Sil 210", "Hi-Sil 233", and "Hi-Sil 243LD" available from PPG Industries; "Zeosil 1115MP", "Zeosil 1165MP", and "Zeosil 165GR" available from Solvay S.A.; "ULTRASIL VN2", "ULTRASIL VN3", "ULTRASIL 7000GR", and "ULTRASIL 9100GR" available from EVONIK AG; "NIPSIL VN3", "NIPSIL AQ", "NIPSIL ER", and "NIPSIL RS-150" available from TOSOH SILICA CORPORATION; and the like.

The amount of silica compounded in the rubber composition according to the present invention is preferably 10 to 200 parts by weight, more preferably 20 to 150 parts by weight, still more preferably 30 to 100 parts by weight relative to 100 parts by weight of the conjugated diene polymer in the rubber composition. When the amount of silica contained is within the above ranges, the processability can be improved, and the silica dispersibility and the balance between fuel efficiency and durability of a cross-linked rubber to be obtained can be further improved.

The method of adding silica to the conjugated diene polymer is not particularly limited. A method of adding silica to a solid conjugated diene polymer, and kneading the mixture (dry kneading), a method of adding silica to a solution containing a conjugated diene polymer and coagulating, and drying the mixture (wet kneading), and the like are applicable.

The rubber composition according to the present invention may contain fillers other than silica. Examples of the fillers other than silica include calcium silicate, aluminum silicate, carbon black, calcium carbonate, talc, aluminum hydroxide, alumina, clay, mica, and the like. Among these, carbon black is preferred. These fillers may be used alone or in combination. The amount of fillers other than silica compounded is not particularly limited as long as the advantageous effects of the present invention are not impaired.

Examples of carbon black include furnace black, acetylene black, thermal black, channel black, and graphite. Examples of channel black include EPC, MPC, and CC. Examples of furnace carbon black include SAF, ISAF, HAF, MAF, FEF, SRF, GPF, APF, FF, CF, SCF, and ECF. Examples of thermal black include FT and MT. These carbon blacks may be used alone or in combination.

The ratio of the content of silica to the total content of fillers (the total content of silica and fillers other than silica) in the rubber composition according to the present invention is not particularly limited, and is preferably 30 to 100% by weight, more preferably 50 to 100% by weight, still more preferably 70 to 100% by weight, particularly preferably 80 to 100% by weight. When the ratio of the content of silica is within the above ranges, the balance between fuel efficiency and durability of a cross-linked rubber to be obtained can be further improved.

[Sulfide-based silane coupling agent]

The rubber composition according to the present invention contains a sulfide-based silane coupling agent in addition to the conjugated diene polymer and silica described above.

Specific examples of the sulfide-based silane coupling agent include bis(3-(triethoxysilyl)propyl) disulfide, bis(3-(triethoxysilyl)propyl) trisulfide, bis(3-(triethoxysilyl)propyl) tetrasulfide, 3-octanoylthio-1-propyl-triethoxysilane, γ-trimethoxysilylpropylbenzothiazyl tetrasulfide, γ-trimethoxysilylpropyldimethylthiocarbamyl tetrasulfide, 3-trimethoxysilylpropyl-N,N-dimethylthiocarbamoyl tetrasulfide, and 3-trimethoxysilylpropyl methacrylate monosulfide. Among these, bis(3-(triethoxysilyl)propyl) tetrasulfide, bis(3-(triethoxysilyl)propyl) disulfide, and bis(3-(triethoxysilyl)propyl) trisulfide are preferred, and bis(3-(triethoxysilyl)propyl) tetrasulfide is more preferred. These sulfide-based silane coupling agent may be used alone or in combination.

The amount of the sulfide-based silane coupling agent compounded is not particularly limited, and is preferably 0.1 to 30 parts by weight, more preferably 1 to 15 parts by weight relative to 100 parts by weight of silica. When the amount of the sulfide-based silane coupling agent compounded is within the above ranges, the compatibility between the conjugated diene polymer and silica can be further improved, the silica dispersibility can be further improved, leading to further improved product stability, and the balance between fuel efficiency and durability of a cross-linked rubber to be obtained can be further improved.

[Cross-linking agent]

The rubber composition according to the present invention contains a cross-linking agent in addition to the conjugated diene polymer, silica, and the sulfide-based silane coupling agent described above.

Examples of the cross-linking agent include sulfur, sulfur-containing compounds such as halogenated sulfur, organic peroxides, quinone dioximes, organic polyvalent amine compounds, alkyl phenol resins having a methylol group, and the like. Among these, sulfur is preferably used. The amount of the cross-linking agent to be compounded is preferably 0.1 to 15 parts by weight, more preferably 0.5 to 5 parts by weight, particularly preferably 1 to 4 parts by weight relative to 100 parts by weight of the conjugated diene polymer in the rubber composition.

If sulfur or a sulfur-containing compound is used as the cross-linking agent, a cross-linking accelerator and a cross-linking activator are preferably used in combination. Examples of the cross-linking accelerator include sulfenamide-based cross-linking accelerators; guanidine-based cross-linking accelerators; thiourea-based cross-linking accelerators; thiazole-based cross-linking accelerators; thiuram-based cross-linking accelerators; dithiocarbamic acid-based cross-linking accelerators; xanthic acid-based cross-linking accelerators; and the like. Among these, preferred are those containing sulfenamide-based cross-linking accelerators. These cross-linking accelerators are used alone or in combination. The amount of the cross-linking accelerator to be compounded is preferably 0.1 to 15 parts by weight, more preferably 0.5 to 5 parts by weight, particularly preferably 1 to 4 parts by weight relative to 100 parts by weight of the conjugated diene polymer in the rubber composition.

Examples of the cross-linking activator include higher fatty acids such as stearic acid; zinc oxide; and the like. These cross-linking activators are used alone or in combination. The amount of the cross-linking activator compounded is preferably 0.05 to 20 parts by weight, particularly preferably 0.5 to 15 parts by weight relative to 100 parts by weight of the conjugated diene polymer in the rubber composition.

Furthermore, besides the ingredients described above, the rubber composition according to the present invention can be compounded with necessary amounts of compounding agents such as an antioxidant, an activating agent, a process oil, a plasticizer, a lubricant, and a tackifier, according to a normal method. Petroleum-based softening agents, plant-derived softening agents, vegetable oil, and fatty acids can be used as a process oil, and are used alone or in combination.

[Index of vulcanization characteristics of rubber composition (tc10)]

The rubber composition according to the present invention has a value of tc10, which is an indicator of vulcanization characteristics measured using an oscillating curemeter according to JIS K6300-2, which satisfies Formula (1).

$$0.8 \text{ minutes} < tc10 < 5.0 \text{ minutes} \quad (1)$$

The rubber composition according to the present invention contains a sulfide-based silane coupling agent in addition to the conjugated diene polymer, silica, and the cross-linking agent, and the vulcanization characteristics thereof are regulated such that the value of tc10, which is an indicator of vulcanization characteristics, falls within the above specific ranges. Accordingly, excellent product stability accompanying excellent silica dispersibility can be achieved, and excellent fuel efficiency and excellent durability of a cross-linked rubber to be obtained can be achieved at the same time. The value of tc10 of a rubber composition can be measured by the method described in Examples.

The value of tc10 of the rubber composition according to the present invention is not particularly limited as long as the value satisfies Formula (1), preferably satisfies 0.8 minutes < tc10 < 4.5 minutes, and more preferably satisfies 0.8 minutes < tc10 < 4.0 minutes. When the value of tc10 is within the above ranges, the silica dispersibility and the balance between fuel efficiency and durability of a cross-linked rubber to be obtained can be further improved. From the viewpoint of capability of further improving filler dispersibility and thus providing further improved product stability, the value preferably satisfies 0.8 minutes < tc10 < 3.5 minutes, and more preferably satisfies 0.8 minutes < tc10 < 3.0 minutes. On the other hand, from the viewpoint of capability of further improving the durability of a cross-linked rubber to be obtained, the value preferably satisfies 1.0 minute < tc10 < 4.0 minutes, more preferably satisfies 1.5 minutes < tc10 < 3.8 minutes, and still more preferably satisfies 2.0 minutes < tc10 < 3.5 minutes. The value of tc10 of a rubber composition can be controlled, for example, in a preferred method for producing a rubber composition as described later, by controlling the time of standing in the production of the rubber composition in which a rubber composition before standing is allowed to stand.

[Method for producing rubber composition]

The rubber composition according to the present invention can be produced preferably by mixing a conjugated diene polymer, silica, a sulfide-based silane coupling agent, a cross-linking agent, and various compounding agents used as needed, and then allowing the mixture to stand at room temperature (20 to 30°C) for 1 to 21 days. After standing at room temperature (20 to 30°C) for 1 to 21 days, not only the rubber composition contains the above ingredients, but also the vulcanization characteristics thereof are regulated such that the value of tc10, which is an indicator of vulcanization characteristics, falls within the above specific ranges.

When a conjugated diene polymer, silica, a sulfide-based silane coupling agent, a cross-linking agent, and various compounding agents used as needed are mixed, preferably, the ingredients excluding thermally unstable ingredients such as a cross-linking agent and a cross-linking accelerator, specifically, ingredients such as a conjugated diene polymer, silica, and a sulfide-based silane coupling agent are kneaded, and thereafter the kneaded product is mixed with the thermally unstable ingredients such as a cross-linking agent and a cross-linking accelerator. When the ingredients excluding thermally unstable ingredients are kneaded, the kneading temperature is preferably 80 to 200°C, more preferably 110 to 180°C, and the kneading time is preferably 30 seconds to 30 minutes. The kneaded product and the thermally unstable ingredients such as a cross-linking agent and a cross-linking accelerator are usually mixed after cooling to 60°C or less.

When the above ingredients are kneaded, even if the temperature of a mixer is set at a predetermined temperature, the temperature of the kneaded product often increases due to friction produced during kneading. Accordingly, in the present invention, the temperature at kneading is preferably controlled to fall within the above ranges by regulating the rotational speed and the like to keep the temperature of the kneaded product constant with due consideration of the increase in temperature due to the friction produced during kneading.

As described above, a rubber composition before standing produced by mixing a conjugated diene polymer, silica, a sulfide-based silane coupling agent, a cross-linking agent, and various compounding agents used as needed can be obtained. After the rubber composition before standing is obtained, the rubber composition according to the present

invention can be suitably produced by allowing the rubber composition to stand at room temperature (20 to 30°C), and leaving the standing at room temperature (20 to 30°C) to continue for 1 to 21 days.

In the case where the ingredients excluding thermally unstable ingredients such as a cross-linking agent and a cross-linking accelerator are kneaded, and thereafter the kneaded product is mixed with the thermally unstable ingredients such as a cross-linking agent and a cross-linking accelerator, when the latter mixing is performed at a temperature higher than room temperature, the mixture is cooled to room temperature in a short time (e.g., in about 1 hour) after the mixing, and then the rubber composition before standing is allowed to stand at room temperature (20 to 30°C). The time of standing at room temperature (20 to 30°C) is not particularly limited, and can be 1 to 21 days. From the viewpoint of capability of further improving the filler dispersibility and thus providing further improved product stability, the time of standing is preferably 1 to 18 days, more preferably 1 to 14 days, still more preferably 1 to 10 days, particularly preferably 1 to 7 days. On the other hand, from the viewpoint of capability of further improving the durability of a cross-linked rubber to be obtained, the time of standing is preferably 2 to 20 days, more preferably 3 to 19 days, still more preferably 4 to 18 days.

<Cross-linked rubber>

The rubber composition according to the present invention can be obtained by cross-linking the rubber composition according to the present invention. The rubber composition according to the present invention can be preferably produced by a method for producing the cross-linked rubber according to the present invention described later.

The method for producing the cross-linked rubber according to the present invention comprises a step of obtaining a rubber composition by mixing a conjugated diene polymer, silica, a sulfide-based silane coupling agent, and a cross-linking agent, and then allowing the mixture to stand at room temperature for 1 to 21 days, and a step of cross-linking the rubber composition.

The cross-linked rubber according to the present invention can be produced using the rubber composition according to the present invention, for example, by shaping the rubber composition with a molding machine supporting a desired shape, such as an extruder, an injection molding machine, a press, or a roll, and performing a cross-linking reaction by heating to produce a cross-linked rubber having a fixed shape. In this case, the rubber composition may be preliminarily shaped and then cross-linked, or may be shaped and cross-linked at the same time. The shaping temperature is usually 10 to 200°C, preferably 25 to 120°C. The cross-linking temperature is usually 100 to 200°C, preferably 130 to 190°C, and the cross-linking time is usually 1 minute to 24 hours, preferably 2 minutes to 12 hours, particularly preferably 3 minutes to 6 hours.

Depending on the shape, the size, and the like thereof, the inside of the cross-linked rubber may not be sufficiently cross-linked, even when the surface thereof is cross-linked. For this reason, the cross-linked rubber may be further heated for secondary cross-linking.

As a heating method, a common method used to cross-link rubber, such as press heating, steam heating, oven heating, or hot air heating, can be appropriately selected.

<Method for producing a cross-linked rubber>

The present invention also relates to a method for producing a cross-linked rubber.

The method for producing the cross-linked rubber according to the present invention comprises a step of obtaining a rubber composition by mixing a conjugated diene polymer, silica, a sulfide-based silane coupling agent, and a cross-linking agent, and then allowing the mixture to stand at room temperature for 1 to 21 days, and a step of cross-linking the rubber composition.

As the method for obtaining a rubber composition by mixing a conjugated diene polymer, silica, a sulfide-based silane coupling agent, and a cross-linking agent, and then allowing the mixture to stand at room temperature for 1 to 21 days, the method described above can be used. Specifically, preferred is a method of kneading the ingredients excluding thermally unstable ingredients such as a cross-linking agent and a cross-linking accelerator, then mixing the kneaded product with the thermally unstable ingredients such as a cross-linking agent and a cross-linking accelerator, cooling the mixture to room temperature in a short time as needed to obtain a rubber composition before standing, and thereafter allowing the rubber composition before standing to stand at room temperature for 1 to 21 days.

As the method for cross-linking the rubber composition, the method described above can be used. Specifically, preferred is a method of shaping the rubber composition with a molding machine supporting a desired shape, and performing a cross-linking reaction by heating to produce a cross-linked rubber having a fixed shape.

The resulting cross-linked rubber according to the present invention is obtained by using the rubber composition according to the present invention described above, and thus has excellent fuel efficiency and durability. Accordingly, owing to the excellent properties, the cross-linked rubber according to the present invention can be used in a variety of applications. For example, the cross-linked rubber can be used as materials for various tire parts such as cap treads, base treads, carcasses, sidewalls, and bead parts in tires; materials for various industrial products such as hoses, belts, mats,

and antivibration rubbers; impact resistance improvers for resins; resin film cushioning materials; shoe soles; rubber shoes; golf balls; toys; and the like. Especially, the cross-linked rubber according to the present invention is suitably used as materials for tires due to the excellent fuel efficiency and durability.

## EXAMPLES

Hereinafter, the present invention will be described in more detail based on Examples, but the present invention is not limited to these Examples. Hereinafter, "parts" is a weight basis unless otherwise specified weight. Tests and evaluations conformed to the followings.

[Weight average molecular weight and coupling ratio of conjugated diene polymer]

A chart was obtained based on the molecular weight against polystyrene standards in gel permeation chromatography (GPC), and the weight average molecular weight of the conjugated diene polymer was determined based on the chart obtained. Specific measurement conditions for gel permeation chromatography were set as follows.

measurement apparatus: high performance liquid chromatograph (available from Tosoh Corporation, trade name "HLC-8320")
columns: two polystyrene-based columns available from Tosoh Corporation, trade name "GMH-HR-H", connected in series.
detector: differential refractive index (RI)
eluent: tetrahydrofuran
column temperature: 40°C

The coupling ratio was determined as follows: In the elution profile obtained by gel permeation chromatography on the conditions above, a peak having the smallest peak top molecular weight (the peak top molecular weight corresponding to the polymer chain before the coupling reaction) was identified; thereafter, the elution area of a portion having a peak top molecular weight 1.5 times or larger the peak top molecular weight of the peak (peak top molecular weight corresponding to the coupled polymer) was determined, was divided by the total elution area, and was converted to percentage.

[Aromatic vinyl monomer unit content and vinyl bond content in conjugated diene polymer]

The aromatic vinyl monomer unit content and vinyl bond content of the conjugated diene polymer were measured by $^1H$-NMR.

[Mooney viscosity (ML1+4, 100°C) of oil-extended conjugated diene polymer]

The Mooney viscosity (ML1+4, 100°C) of an oil-extended conjugated diene polymer was measured using a Mooney viscometer (available from SHIMADZU CORPORATION) according to JIS K6300-1.

[tc10]

The tc10 (unit: minutes), which is an indicator of vulcanization characteristics, was measured according to JIS K6300-2 using an oscillating curemeter (available from Alpha Technologies) at a measurement temperature of 160°C, an oscillation frequency of 100 per minute, and an oscillation angle of ±1° for a measuring time of 60 minutes.

[(MH-ML) index]

MH-ML, which is an indicator of vulcanization characteristics, was measured according to ISO 6502 using an oscillating curemeter (available from Alpha Technologies) at a measurement temperature of 160°C, an oscillation frequency of 100 per minute, and an oscillation angle of ±1° for a measuring time of 60 minutes. An index was calculated from the MH-ML in each of Examples and Comparative Examples based on the MH-ML in Comparative Example 2 as 100, and the index was designated as a (MH-ML) index. A greater (MH-ML) index indicates capability of producing a cross-linked rubber having a higher cross-linking density and superior durability.

[Index of tanδ at 60°C of cross-linked rubber]

A strip having a width of 4 mm and a length of 40 mm was punched out from the cross-linked rubber sheet having a thickness of 2 mm to give a test piece. The loss tangent (tanδ(60°C)) of the resulting test piece was measured using a viscoelasticity measurement device (available from Ueshima Seisakusho Co., Ltd.) at a frequency of 10 Hz, an initial elongation of 10%, a strain amplitude of 2%, and a temperature of 60°C. An index was calculated from the loss tangent (tanδ (60°C)) in each of Examples and Comparative Examples based on the loss tangent (tanδ (60°C)) in Comparative Example 2 as 100, and the index was designated as a value of fuel efficiency. A greater value of fuel efficiency indicates superior fuel efficiency of a cross-linked rubber to be obtained.

[Payne effect index]

An uncross-linked rubber composition was processed to prepare a 3-cm square test piece weighing 6 g. The test piece was preheated at 100°C for 4 minutes, and then storage moduli G' at dynamic strains of 0.7% and 42% were measured using Premier RPA (available from Alpha Technologies) at a temperature of 40°C and a frequency of 10 Hz. The absolute value of the difference (ΔG') between the storage modulus G' at a dynamic strain of 0.7% and the storage modulus G' at a dynamic strain of 42% was calculated. The absolute value of the difference (ΔG') between the storage moduli G' in Comparative Example 2 was divided by the absolute value of the difference (ΔG') between the storage moduli G' in each of Examples and Comparative Examples, and the quotient was multiplied by 100 to give a value that was designated as a Payne effect index in each of Examples and Comparative Examples. Note that the absolute value (ΔG') of the difference between storage moduli G' is inversely proportional to the Payne effect index. That is, when the absolute value (ΔG') of the difference between storage moduli G' is the same as the value in Comparative Example 2, the Payne effect index is 100. As the absolute value (ΔG') of the difference between storage moduli G' decreases, the Payne effect index increases. As the absolute value (ΔG') of the difference between storage moduli G' increases, the Payne effect index decreases. A larger Payne effect index indicates a better dispersion state of fillers contained in the uncross-linked rubber composition, which means that superior product stability is thus provided.

[Preparation of polymer block (A) having active terminal]

140.8 g of cyclohexane and 3.0 mmol of tetramethylethylenediamine were placed in a nitrogen-purged 800-mL vessel, and 30.0 mmol of n-butyllithium was further added. Next, 113.6 g of isoprene and 9.2 g of styrene were added slowly, and the materials were allowed to react with each other in the vessel at 50°C for 120 minutes to give a polymerization solution containing a polymer block (A) having an active terminal. The weight average molecular weight (Mw) of the resulting polymer block (A) was 6,500, the molecular weight distribution (Mw/Mn) was 1.10, the styrene monomer unit content was 7.5%, the isoprene monomer unit content was 92.5%, and the vinyl bond content was 7.0%.

(Production Example 1 [oil-extended conjugated diene polymer P1])

Under a nitrogen atmosphere, 7,956 g of industrial hexane, 1,014 g of cyclohexane, 4.25 mmol of tetramethylethylenediamine, 408 g of 1,3-butadiene, and 680 g of styrene were placed in an autoclave having an inner volume of 20 L equipped with a stirrer. To devitalize impurities that act as deactivators of polymerization, a small amount of n-butyllithium was introduced into the autoclave as a scavenger, and then the polymer block (A) having an active terminal obtained above was added in an amount equivalent to a lithium atom content of 7.08 mmol to cause a polymerization propagation reaction at 50°C. After the polymerization reaction was allowed to continue for 20 minutes, 612 g of 1,3-butadiene was added continuously over 80 minutes. After the polymerization conversion ratio was confirmed to be in the range of 95% to 100%, a polyorganosiloxane represented by Formula (10) was added such that the content of the epoxy group was 3.19 mmol, and allowed to react for 20 minutes. Then, 2 equivalents of methanol as a polymerization terminator relative to the total amount of lithium in the autoclave was added to give a solution containing a conjugated diene polymer. To this solution, 0.20 parts of 2,4-bis(octylthiomethyl)-6-methylphenol was added as an antioxidant relative to 100 parts of the conjugated diene polymer to give a polymerization solution containing a conjugated diene polymer P1. When the resulting conjugated diene polymer P1 was measured according to the methods described above, the weight average molecular weight (Mw) was 724,000, the coupling ratio was 50.7%, the styrene unit content was 40.7% by weight, and the vinyl bond content in the butadiene units was 29.1 mol%.

Next, to the polymerization solution containing the conjugated diene polymer P1, 10 parts of a process oil (available from ENEOS Corporation, trade name: AROMAX T-DAE) as an extender oil relative to 100 parts of the conjugated diene polymer was added and stirred, and most of the volatile components in the resulting polymerization solution was evaporated at room temperature for 24 hours, and then the polymerization solution was vacuum dried at 55°C for 12 hours to give an oil-extended conjugated diene polymer P1. When the resulting oil-extended conjugated diene

polymer P1 was measured according to the methods described above, the Mooney viscosity of the oil-extended conjugated diene polymer P1 was 117 (ML1+4, 100°C).

[Chem. 3]

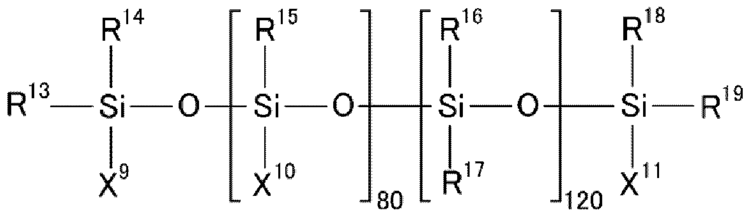

(10)

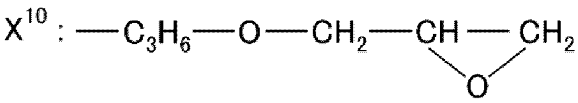

$X^9$, $X^{11}$, $R^{13}$～$R^{19}$ : $-CH_3$

(Production Example 2 [oil-extended conjugated diene polymer P2])

Under a nitrogen atmosphere, 7,956 g of industrial hexane, 1,014 g of cyclohexane, 4.80 mmol of tetramethylethylenediamine, 408 g of 1,3-butadiene, and 680 g of styrene were placed in an autoclave having an inner volume of 20 L equipped with a stirrer. To devitalize impurities that act as deactivators of polymerization, a small amount of n-butyllithium was introduced into the autoclave as a scavenger, and then 6.67 mmol of n-butyllithium was added to cause a polymerization initiation reaction at 50°C. After the polymerization reaction was allowed to continue for 20 minutes, 612 g of 1,3-butadiene was added continuously over 80 minutes. After the polymerization conversion ratio was confirmed to be in the range of 95% to 100%, a polyorganosiloxane represented by Formula (10) was added such that the content of the epoxy group was 3.20 mmol, and allowed to react for 20 minutes. Then, 2 equivalents of methanol as a polymerization terminator relative to the total amount of lithium in the autoclave was added to give a solution containing a conjugated diene polymer P2. To this solution, 0.20 parts of 2,4-bis(octylthiomethyl)-6-methylphenol was added as an antioxidant relative to 100 parts of the conjugated diene polymer to give a polymerization solution containing a conjugated diene polymer P2. When the resulting conjugated diene polymer P2 was measured according to the methods described above, the weight average molecular weight (Mw) was 728,000, the coupling ratio was 53.0%, the styrene unit content was 41.3% by weight, and the vinyl bond content in the butadiene units was 28.5 mol%.

Next, to the polymerization solution containing the conjugated diene polymer P2, 10 parts of T-DAE as an extender oil relative to 100 parts of the conjugated diene polymer was added and stirred, and most of the volatile components in the resulting polymerization solution was evaporated at room temperature for 24 hours, and then the polymerization solution was vacuum dried at 55°C for 12 hours to give an oil-extended conjugated diene polymer P2. When the resulting oil-extended conjugated diene polymer P2 was measured according to the methods described above, the Mooney viscosity of the oil-extended conjugated diene polymer P2 was 116 (ML1+4, 100°C).

(Example 1)

[Production and evaluation of rubber composition and cross-linked rubber]

In a 600-mL Brabender type mixer, 88 parts by weight (80 parts by weight as rubber components) of the oil-extended conjugated diene polymer P1 and 20 parts by weight of polybutadiene rubber (available from Zeon Corporation, trade name: Nipol BR1220) were masticated for 30 seconds. In the next step, 80 parts by weight of silica (available from EVONIK, trade name: ULTRASIL 7000GR), 22.0 parts by weight of a process oil (available from ENEOS Corporation, trade name: AROMAX T-DAE), 6.4 parts by weight of bis(3-(triethoxysilyl)propyl) tetrasulfide (a sulfide-based silane coupling agent, available from Evonik, trade name: Si69), 5.0 parts by weight of carbon black (Cabot Japan K.K., trade name: N339), 3.0 parts by weight of zinc oxide (available from SEIDO CHEMICAL INDUSTRY CO., LTD., trade name: Zinc Oxide II), 2.0 parts by weight of stearic acid (available from New Japan Chemical Co., Ltd., trade name: stearic acid 50S), and 2.0 parts by weight of N-phenyl-N'-(1,3-dimethylbutyl)-p-phenylenediamine (available from OUCHI SHINKO CHEMICAL INDUSTRIAL CO., LTD., trade name: NOCRAC 6C) were added, and these materials were further kneaded for 4.5 minutes. Then, a conjugated diene polymer composition after the primary kneading was discharged from the Labo plastomill. When the composition was discharged, the Labo plastomill indicated a temperature of 160°C. The kneaded product was cooled to room temperature, and was kneaded again in the Brabender type mixer at a starting temperature of 110°C for 3 minutes. Then, the kneaded product after the secondary kneading was discharged from the Labo plastomill. In the next step, 1.7 parts by weight of sulfur (available from Tsurumi Chemical Industry Co., Ltd., trade name: "GOLDEN FLOWER" POWDER SULFUR 200 mesh), 1.8 parts by weight of N-cyclohexyl-2-benzothiazolylsulfenamide (available from OUCHI SHINKO CHEMICAL INDUSTRIAL CO., LTD., trade name: NOCCELER CZ-G), and 1.7 parts by weight of 1,3-diphenylguanidine (available from OUCHI SHINKO CHEMICAL INDUSTRIAL CO., LTD., trade name: NOCCELER D) were added to the resulting kneaded product in an open roll mill at 50°C; and then these materials were kneaded with the open roll mill at a temperature setting of 50°C, and formed into a sheet and cooled to room temperature to give a rubber composition before standing. This rubber composition before standing was allowed to stand at room temperature for 1 day to give a rubber composition. Then, tc10, the (MH-ML) index, and the Payne effect index of the rubber composition were measured and evaluated. On the other hand, the resulting rubber composition was cross-linked by pressing at 160°C for 10 minutes to give a test piece of the cross-linked rubber. Then, the index of tanδ at 60°C of the resulting test piece was evaluated. The results of these evaluations are shown in Table 1.

(Example 2)

A cross-linked rubber was obtained in the same manner as in Example 1 except that the rubber composition before standing according to Example 1 was allowed to stand at room temperature for 7 days instead of allowing it to stand at room temperature for 1 day. The results of evaluations are shown in Table 1.

(Example 3)

A cross-linked rubber was obtained in the same manner as in Example 1 except that the rubber composition before standing according to Example 1 was allowed to stand at room temperature for 14 days instead of allowing it to stand at room temperature for 1 day. The results of evaluations are shown in Table 1.

(Comparative Example 1)

A cross-linked rubber was obtained in the same manner as in Example 1 except that the rubber composition before standing according to Example 1 was allowed to stand at room temperature for 0 days (i.e., without allowing it to stand at room temperature, the next step was carried out immediately) instead of allowing it to stand at room temperature for 1 day. The results of evaluations are shown in Table 1.

(Comparative Example 2)

A cross-linked rubber was obtained in the same manner as in Example 1 except that the oil-extended conjugated diene polymer P2 was used instead of the oil-extended conjugated diene polymer P1. The results of evaluations are shown in Table 1.

[Table 1]

Table 1

| | | Example 1 | Example 2 | Example 3 | Comp. Ex. 1 | Comp. Ex. 2 |
|---|---|---|---|---|---|---|
| Composition of rubber composition | | | | | | |
| Oil-extended conjugated diene polymer (P1) | [Parts] | 88 | 88 | 88 | 88 | |
| Oil-extended conjugated diene polymer (P2) | [Parts] | | | | | 88 |
| Polybutadiene rubber | [Parts] | 20 | 20 | 20 | 20 | 20 |
| Sulfide-based silane coupling agent (Si69) | [Parts] | 6.4 | 6.4 | 6.4 | 6.4 | 6.4 |
| Production method | | | | | | |
| Time of standing at room temperature | [Days] | 1 | 7 | 14 | 0 | 1 |
| Evaluations | | | | | | |
| tc10 | [Minutes] | 0.84 | 2.90 | 3.10 | 0.65 | 0.78 |
| (MH-ML) index | | 103 | 147 | 146 | 84 | 100 |
| Payne effect index | | 109 | 117 | 105 | 108 | 100 |
| Index of tanδ at 60°C | | 106 | 106 | 109 | 106 | 100 |

As shown in Table 1, the rubber compositions comprising a conjugated diene polymer, silica, a sulfide-based silane coupling agent, and a cross-linking agent, and having a value of tc10 which satisfies Formula (1) had excellent silica dispersibility and thus provided superior product stability, and was able to provide a cross-linked rubber having excellent fuel efficiency and durability (Examples 1 to 3) .

On the other hand, when the value of tc10 was too small, the cross-linked rubber obtained had inferior durability. Furthermore, the silica dispersibility and the fuel efficiency were sometimes inferior (Comparative Examples 1 to 2).

## Claims

1. A rubber composition comprising a conjugated diene polymer, silica, a sulfide-based silane coupling agent, and a cross-linking agent, and having a value of tc10, which is an indicator of vulcanization characteristics measured using an oscillating curemeter according to JIS K6300-2, which satisfies Formula (1):

$$0.8 \text{ minutes} < tc10 < 5.0 \text{ minutes} \quad (1).$$

2. The rubber composition according to claim 1, wherein the conjugated diene polymer contains 25 to 99.9% by weight of 1,3-butadiene units, 0.1 to 15% by weight of isoprene monomer units, and 0 to 60% by weight of aromatic vinyl monomer units.

3. The rubber composition according to claim 2, wherein the conjugated diene polymer contains 40 to 96.9% by weight of 1,3-butadiene units, 0.1 to 10% by weight of isoprene monomer units, and 3 to 50% by weight of aromatic vinyl monomer units.

4. The rubber composition according to any one of claims 1 to 3, wherein the conjugated diene polymer contains an isoprene-containing block containing 80 to 100% by weight of isoprene monomer units.

5. The rubber composition according to any one of claims 1 to 4, wherein the conjugated diene polymer contains a silicon atom-containing functional group formed with a siloxane compound.

6. A cross-linked rubber which is a cross-linked product of the rubber composition according to any one of claims 1 to 5.

**7.** A tire comprising the cross-linked rubber according to claim 6.

**8.** A method for producing a cross-linked rubber, comprising a step of obtaining a rubber composition by mixing a conjugated diene polymer, silica, a sulfide-based silane coupling agent, and a cross-linking agent, and then allowing the mixture to stand at room temperature for 1 to 21 days, and
a step of cross-linking the rubber composition.

**9.** The method for producing a cross-linked rubber according to claim 8, wherein the conjugated diene polymer contains 25 to 99.9% by weight of 1,3-butadiene units, 0.1 to 15% by weight of isoprene monomer units, and 0 to 60% by weight of aromatic vinyl monomer units.

**10.** The method for producing a cross-linked rubber according to claim 9, wherein the conjugated diene polymer contains 40 to 96.9% by weight of 1,3-butadiene units, 0.1 to 10% by weight of isoprene monomer units, and 3 to 50% by weight of aromatic vinyl monomer units.

**11.** The method for producing a cross-linked rubber according to any one of claims 8 to 10, wherein the conjugated diene polymer contains an isoprene-containing block containing 80 to 100% by weight of isoprene monomer units.

**12.** The method for producing a cross-linked rubber according to any one of claims 8 to 11, wherein the conjugated diene polymer contains a silicon atom-containing functional group formed with a siloxane compound.

**INTERNATIONAL SEARCH REPORT**

International application No. **PCT/JP2023/018607**

**A. CLASSIFICATION OF SUBJECT MATTER**

***C08L 9/00***(2006.01)i; ***B60C 1/00***(2006.01)i; ***C08K 3/36***(2006.01)i; ***C08K 5/548***(2006.01)i
FI: C08L9/00; B60C1/00 Z; C08K3/36; C08K5/548

According to International Patent Classification (IPC) or to both national classification and IPC

**B. FIELDS SEARCHED**

Minimum documentation searched (classification system followed by classification symbols)

C08L9/00; B60C1/00; C08K3/36; C08K5/548

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2014/178336 A1 (SUMITOMO RUBBER INDUSTRIES, LTD.) 06 November 2014 (2014-11-06) claims, examples 1-10, 12-20 | 1, 6, 7 |
| Y | | 5 |
| A | | 2-4, 8-12 |
| X | JP 2014-104893 A (SUMITOMO RUBBER INDUSTRIES, LTD.) 09 June 2014 (2014-06-09) claims, examples 1-10, 12-20 | 1, 6, 7 |
| Y | | 5 |
| A | | 2-4, 8-12 |
| X | WO 2009/084285 A1 (SUMITOMO RUBBER INDUSTRIES, LTD.) 09 July 2009 (2009-07-09) claims, example 5 | 1, 6, 7 |
| Y | | 5 |
| A | | 2-4, 8-12 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 July 2023** | **01 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/018607**

**C. DOCUMENTS CONSIDERED TO BE RELEVANT**

| Category* | Citation of document, with indication, where appropriate, of the relevant passages | Relevant to claim No. |
|---|---|---|
| Y | JP 2020-55891 A (NIPPON ZEON CO., LTD.) 09 April 2020 (2020-04-09) claims | 5 |
| Y | JP 2019-172807 A (NIPPON ZEON CO., LTD.) 10 October 2019 (2019-10-10) paragraphs [0028]-[0029] | 5 |
| Y | WO 2022/080236 A1 (ZS ELASTOMERS CO., LTD.) 21 April 2022 (2022-04-21) paragraphs [0052]-[0054] | 5 |

Form PCT/ISA/210 (second sheet) (January 2015)

**INTERNATIONAL SEARCH REPORT**
**Information on patent family members**

International application No.
**PCT/JP2023/018607**

| Patent document cited in search report | Publication date (day/month/year) | Patent family member(s) | Publication date (day/month/year) |
|---|---|---|---|
| WO 2014/178336 A1 | 06 November 2014 | US 2016/0052340 A1<br>claims, examples 1-10, 12-20<br>EP 2985310 A1<br>CN 105164196 A | |
| JP 2014-104893 A | 09 June 2014 | US 2014/0144566 A1<br>claims, examples 1-10, 12-20<br>EP 2738014 A2<br>CN 103849015 A | |
| WO 2009/084285 A1 | 09 July 2009 | (Family: none) | |
| JP 2020-55891 A | 09 April 2020 | (Family: none) | |
| JP 2019-172807 A | 10 October 2019 | (Family: none) | |
| WO 2022/080236 A1 | 21 April 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011105362 A
- WO 2019073828 A
- WO 2019189204 A